(19) **Europäisches Patentamt / European Patent Office / Office européen des brevets**

(11) **EP 0 908 613 B1**

(12) **EUROPEAN PATENT SPECIFICATION**

(45) Date of publication and mention
of the grant of the patent:
**17.02.2010 Bulletin 2010/07**

(51) Int Cl.:
*F02D 41/14* (2006.01)   *F01N 3/20* (2006.01)
*F02D 41/02* (2006.01)

(21) Application number: **98119231.3**

(22) Date of filing: **12.10.1998**

(54) **Engine exhaust gas control system having NOx catalyst**

Abgassteuerungssystem für Brennkraftmaschine mit NOx-Katalysator

Système de commande pour moteur avec catalyseur NOX

(84) Designated Contracting States:
**DE FR GB**

(30) Priority: **13.10.1997 JP 27913397**
**23.03.1998 JP 7418398**

(43) Date of publication of application:
**14.04.1999 Bulletin 1999/15**

(73) Proprietor: **DENSO CORPORATION**
**Kariya-city,**
**Aichi-pref. 448-8661 (JP)**

(72) Inventors:
• **Yamashita, Yukihiro**
**Kariya-city,**
**Aichi-pref., 448-8661 (JP)**
• **Isomura, Shigenori**
**Kariya-city,**
**Aichi-pref., 448-8661 (JP)**

(74) Representative: **TBK-Patent**
**Bavariaring 4-6**
**80336 München (DE)**

(56) References cited:
**EP-A- 0 733 787    EP-A- 0 758 713**
**EP-A- 0 915 244    DE-C- 19 607 151**

• PATENT ABSTRACTS OF JAPAN vol. 1998, no. 14, 31 December 1998 (1998-12-31) & JP 10 252524 A (FUJI HEAVY IND LTD), 22 September 1998 (1998-09-22)
• PATENT ABSTRACTS OF JAPAN vol. 1999, no. 01, 29 January 1999 (1999-01-29) & JP 10 266884 A (MITSUBISHI MOTORS CORP), 6 October 1998 (1998-10-06)
• PATENT ABSTRACTS OF JAPAN vol. 1997, no. 03, 31 March 1997 (1997-03-31) & JP 08 296471 A (NISSAN MOTOR CO LTD), 12 November 1996 (1996-11-12)

**Description**

The present invention relates to an engine exhaust gas control system for performing a lean mixture combustion in an air-fuel ratio lean zone and to an engine exhaust control system having an NOx occluding and reducing catalyst for purifying nitrogen oxides (NOx) in exhaust gas produced at the time of the lean mixture combustion.

In recent years, a lean air-fuel mixture combustion control is used for burning a fuel on the lean side relative to the stoichiometric air-fuel ratio in order to improve fuel consumption. When such a lean mixture combustion is performed, exhaust gas exhausted from the internal combustion engine includes a large quantity of NOx and an NOx catalyst for purifying NOx is therefore necessary. For example, JP patent No. 2600492 (& JP-A-05-506 785) discloses an NOx absorbent (NOx occluding and reducing catalyst) for absorbing NOx when the air-fuel ratio of the exhaust gas is in the lean state and releasing the absorbed NOx when the concentration of oxygen in the exhaust gas is reduced, that is, when the air-fuel ratio is in the rich state.

On the other hand, in a system for absorbing NOx produced at the time of the lean mixture combustion by the NOx catalyst, when the NOx catalyst is saturated with NOx, the NOx purifying ability reaches the limit. Consequently, it is necessary to allow the rich mixture combustion to be temporarily performed in order to recover the purifying ability of the NOx catalyst and to suppress the exhaust of NOx.

EP-A-0 733 787 A teaches to set a rich time (rich mixture combustion period) of the air-fuel mixture and a cycle at which the air-fuel ratio of the air-fuel mixture are made rich in accordance with a deterioration state or a maximum possible amount of absorption of the NOx catalyst. The larger the degree of deterioration of the NOx catalyst is, the shorter is the cycle at which the air-fuel ratio of the air-fuel mixture is made rich, and the shorter is the rich time of the air-fuel mixture.

However, when the lean mixture combustion is switched to the rich mixture combustion, the air-fuel ratio of the mixture near the NOx catalyst does not immediately change to the rich side. Consequently, it is necessary to set the rich time rather long to continue the rich mixture combustion for a time including a time required for a gas condition in an exhaust pipe to shift from the lean state to the rich state. In such a case, when the rich mixture combustion is continued, the fuel injection amount is increased excessively, increasing fuel consumption. At the time of the rich mixture combustion, the engine generating torque is larger than that at the time of the lean mixture combustion. Consequently, when the rich time continues long, fluctuation in engine crankshaft rotation becomes large.

It is an object of the present invention to provide an engine exhaust gas control system, which optimizes a rich mixture combustion time in a normal lean mixture combustion to recover the purifying ability of an NOx catalyst.

The above object is achieved by a control system as defined in claim 1.

In the engine exhaust gas control system according to the invention, normally a lean air-fuel mixture is supplied to an internal combustion engine, so that NOx in exhaust gas is occluded by an NOx catalyst for occluding and reducing NOx. A rich air-fuel mixture is supplied only temporarily to the engine, so that the occluded NOx is released from the NOx catalyst. A rich time for a rich mixture combustion is controlled variably to a minimum. The rich time is set in accordance with an NOx purification state of the NOx catalyst. That is, the rich time is shortened at every predetermined interval until the NOx purification state detected by a sensor indicates a limit of the rich time.

The dependent claims define further developments of the engine exhaust gas control system.

Other objects, features and advantages of the present invention will become more apparent from the following detailed description made with reference to the accompanying drawings.

In the drawings:

Fig. 1 is a schematic diagram showing an engine exhaust gas control system according to a first example outside the scope of the present invention;
Fig. 2 is a flowchart showing a fuel injection control routine in the first example;
Fig. 3 is a flowchart showing a λTG setting routine in the first example;
Fig. 4 is a data map used for setting a rich time in accordance with an engine speed and an intake pressure in the first example;
Fig. 5 is a graph showing a relation between the rich time and an NOx purification rate;
Fig. 6 is a data map used for setting the lean target air-fuel ratio in accordance with the engine speed and the intake pressure in the first example;
Fig. 7 is a time chart showing an operation of the first example;
Fig. 8 is a graph showing a relation between rich time and torque fluctuation;
Fig. 9 is a schematic diagram showing an engine exhaust gas control system according to a second example which is an embodiment of the present invention;
Fig. 10 is a flowchart showing a rich time learning routine in the second example; and
Fig. 11 is a time chart showing an operation of the second example.

The present invention will be described in detail with reference to the drawings in which the same or like numerals are used to denote the same or like parts.

(First Example)

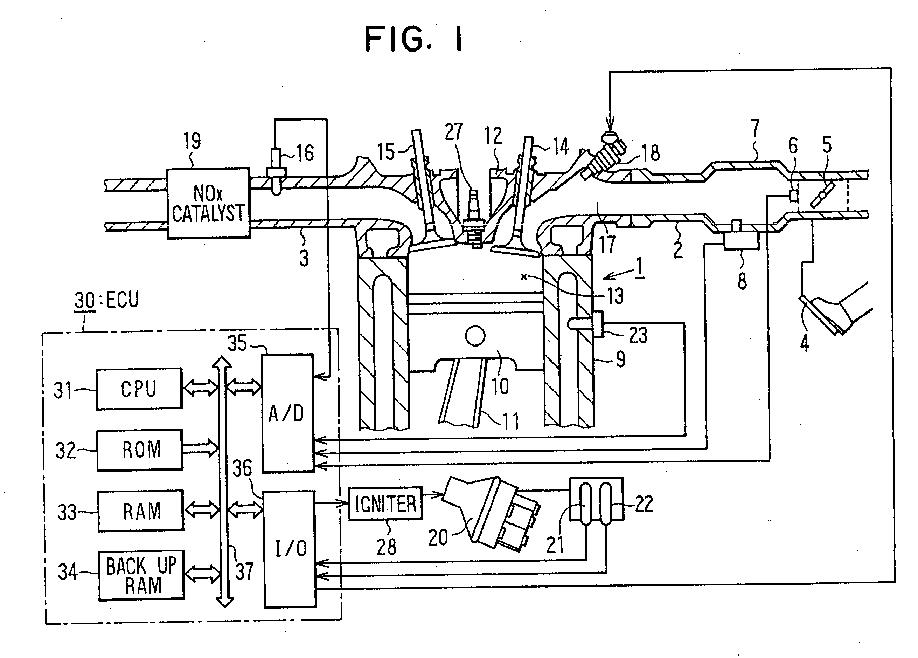

Referring to Fig. 1, an internal combustion engine 1 is a four-cylinder four-cycle spark ignition type. An intake pipe 2 and an exhaust pipe 3 are connected to the engine 1. The intake pipe 2 is provided with a throttle valve 5 which operates interlockingly with an accelerator pedal 4. The opening angle of the throttle valve 5 is detected by a throttle valve sensor 6. An intake pressure sensor 8 is arranged in a surge tank 7 of the intake pipe 2.

A piston 10 is arranged in a cylinder 9 serving as a cylinder of the engine 1 and the piston 10 is connected to a crankshaft (not shown) via a connecting rod 11. A combustion chamber 13 defined by the cylinder 9 and a cylinder head 12 is formed above the piston 10. The combustion chamber 13 is communicated with the intake pipe 2 and the exhaust pipe 3 via an intake valve 14 and an exhaust valve 15.

The exhaust pipe 3 is provided with an A/F sensor 16 constructed by a limit-current type air-fuel ratio sensor for outputting a linear air-fuel ratio signal in a wide zone in proportion to the concentration of oxygen in the exhaust gas (or the concentration of carbon monoxide and the like in unburned gas). On the downstream side of the A/F sensor 16 in the exhaust pipe 3, an NOx catalyst 19 having the function of purifying NOx. The NOx catalyst 19 is known as an NOx occlusion and reduction type catalyst, which occludes NOx in the state of a lean air-fuel ratio and reduces and releases the occluded NOx in the form of CO and HC in the state of the rich air-fuel ratio.

An intake port 17 of the engine 1 is provided with an electromagnetically driven injector 18. A fuel (gasoline) is supplied from a fuel tank (not shown) to the injector 18. In the example, a multipoint injection (MPI) system having injectors 18 for respective branch pipes of an intake manifold is constructed. In this case, a fresh air supplied from the upstream of the intake pipe and a fuel injected by the injector 18 are mixed in the intake port 17. The mixture flows into the combustion chamber 13 (cylinder 9) with the opening operation of the intake valve 14.

A spark plug 27 arranged in the cylinder head 12 ignites by a high voltage for ignition from an igniter 28. A distributor 20 for distributing the high voltage for ignition to the spark plugs 27 of the cylinders is connected to the igniter 28. In the distributor 20, a reference position sensor 21 for generating a pulse signal every 720 ° CA in accordance with the rotating state of the crankshaft and a rotational angle sensor 22 for generating a pulse signal every smaller crank angle (for example, every 30 ° CA) are arranged. In the cylinder 9 (water jacket), a coolant temperature sensor 23 for sensing the temperature of coolant is arranged.

An ECU 30 is mainly constructed by a known microcomputer and has a CPU 31, a ROM 32, a RAM 33, a backup RAM 34, an A/D converter 35, an input/output interface (I/O) 36, and the like. Detection signals of the throttle opening angle sensor 6, the intake pressure sensor 8, the A/F sensor 16, and the water temperature sensor 23 are supplied to the A/D converter 35 and are A/D converted. After that, the resultant signals are fetched by the CPU 31 via a bus 37. The pulse signals of the reference position sensor 21 and the rotational angle sensor 22 are fetched by the CPU 31 via the input/output, interface 36 and the bus 37.

The CPU 31 detects the engine operating states such as a throttle opening angle TH, an intake pressure PM, an air-fuel ratio (A/F), a coolant temperature Tw, a reference crank position (G signal), and an engine speed Ne. The CPU 31 calculates control signals of the fuel injection amount, ignition timing, and the like on the basis of the engine operating state and outputs the control signals to the injector 18 and the igniter 28.

The ECU 30 is programmed to execute various routines to control the exhaust gas.

A fuel injection control routine is executed by the CPU 31 at every fuel injection (every 180° CA in the example) of each cylinder.

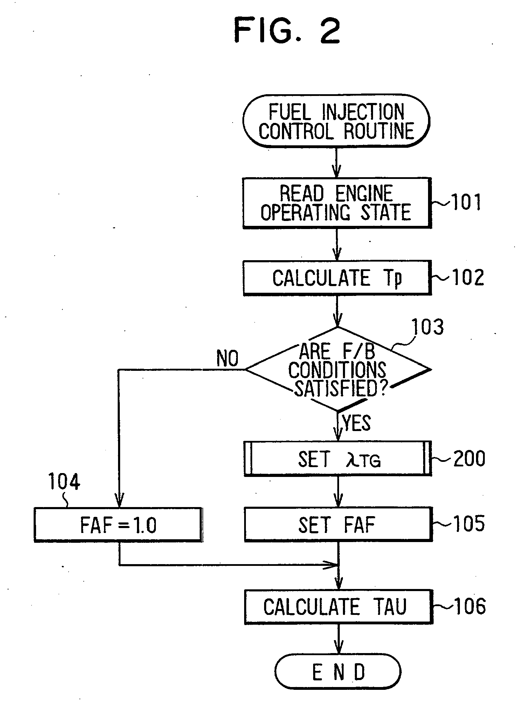

When the routine of Fig. 2 starts, first in step 101, the CPU 31 reads a sensor detection result (engine speed Ne, intake pressure PM, coolant temperature Tw, and the like) showing the engine operating state. In step 102, the CPU 31 calculates a basic injection amount TP according to the engine speed Ne and the intake pressure PM at each time by using a basic injection map preliminarily stored in the ROM 32. The CPU 31 discriminates whether known air-fuel ratio F/B conditions are satisfied or not in step 103. The air-fuel ratio F/B conditions include a condition that the coolant temperature Tw is equal to or higher than a predetermined temperature, a condition that the rotation speed is not high and the load is not high, a condition that the A/F sensor 16 is in an active state, and the like.

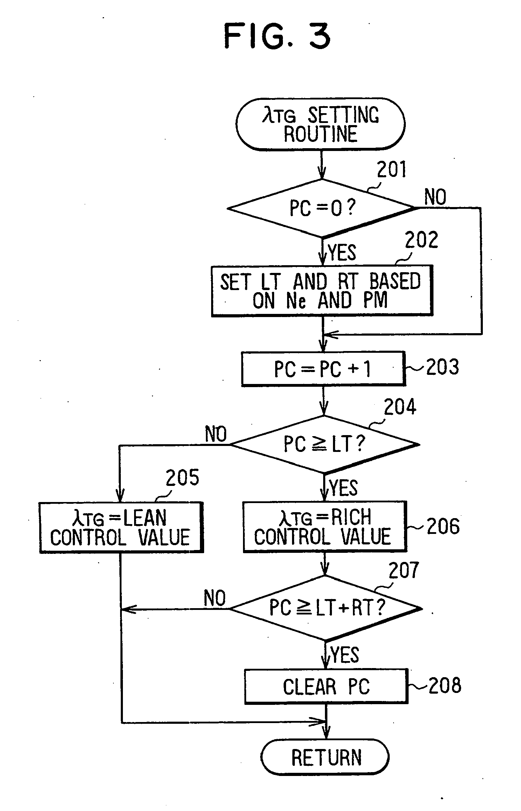

When step 103 is negatively discriminated (when the F/B conditions are not satisfied), the CPU 31 advances to step 104 and sets an air-fuel ratio correction coefficient FAF to "1.0". Setting of FAF = 1.0 denotes that the air-fuel ratio is open controlled. When step 103 is positively discriminated (when the F/B conditions are satisfied), the CPU 31 advances to step 200 and executes a process for setting a target air-fuel ratio λTG. The process for setting the target air-fuel ratio λTG is performed in accordance with the routine of Fig. 3 which will be described hereinlater.

After that, in step 105, the CPU 31 sets the air-fuel ratio correction coefficient FAF on the basis of the deviation of the actual air-fuel ratio λ (sensor measurement value) at each time from the target air-fuel ratio λTG. In the example, the air-fuel ratio F/B control based on the advanced control theory is executed. The air-fuel ratio correction coefficient FAF to make the detection result of the A/F sensor 16 coincide with the target air-fuel ratio at the time of the F/B control is calculated by using the following (1) and (2) equations in the known manner.

$$FAF = K1 \cdot \lambda + K2 \cdot FAF1 +$$

$$\cdots + Kn+1 \cdot FAFn + ZI \qquad \ldots (1)$$

$$ZI = ZI1 + Ka \cdot (\lambda TG - \lambda) \qquad \ldots (2)$$

In the equations (1) and (2), $\lambda$ denotes an air-fuel ratio conversion value of the limit current by the A/F sensor 16, K1 to Kn+1 denote F/B constants, ZI shows an integration term, and Ka shows an integration constant. The suffixes 1 to n+1 are variables each showing the number of controls from the sampling start.

After setting the FAF value, in step 106, the CPU 31 calculates a final fuel injection amount TAU from the basic injection amount Tp, the air-fuel ratio correction coefficient FAF, and other correction coefficients FALL (various correction coefficients of coolant temperature, air-conditioner load, and the like) by using the following equation (3).

$$TAU = Tp \cdot FAF \cdot FALL \qquad \ldots (3)$$

After calculating the fuel injection amount TAU, the CPU 31 outputs a control signal corresponding to the TAU value to the injector 18 and finishes the routine once.

A $\lambda$TG setting routine corresponding to the process of step 200 is shown in Fig. 3. In this routine, the target air-fuel ratio $\lambda$TG is properly set in such a manner that the rich mixture combustion is performed temporarily during the execution of the lean mixture combustion. That is, in the example, a lean time LT and a rich time RT are set so as to be at a predetermined time ratio on the basis of the value of a period counter PC which counts every fuel injection and the lean mixture combustion and the rich mixture combustion are alternately executed in accordance with the times LT and RT.

In Fig. 3, the CPU 31 discriminates whether the period counter PC at that time is "0" or not in step 201. On condition that PC = 0 (YES in step 201), in step 202, the lean time TL and the rich time TR are set on the basis of the engine speed Ne and the intake pressure PM. In case of "NO" in step 201 (PC ‡ 0), the CPU 31 skips the process of step 202.

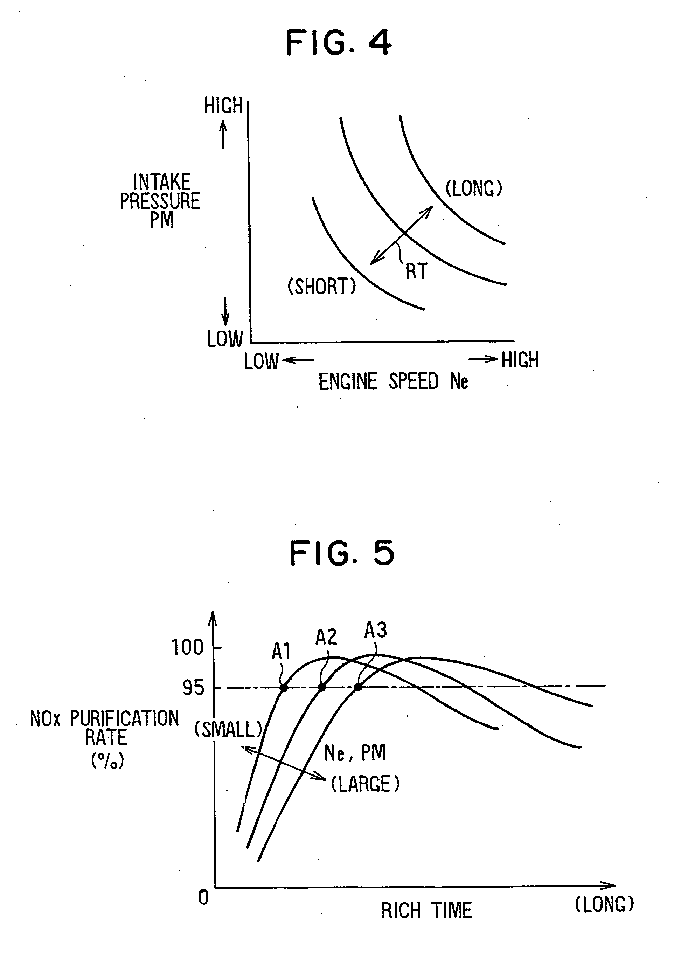

The lean time LT and the rich time RT correspond to the number of fuel injection times at the lean air-fuel ratio and the number of fuel injection times at the rich air-fuel ratio, respectively. Basically, the higher the engine speed Ne is or the higher the intake pressure PM is, LT and RT are set to larger values. In the example, the rich time RT is derived by retrieving a map data based on the relation of Fig. 4. The relation of Fig. 4 is set so as to realize the shortest rich time within a range in which a desired NOx purification rate by the NOx catalyst 19 is obtained.

That is, the characteristic of the NOx purification rate with the rich time has the relation of Fig. 5. According to Fig. 5, the characteristic of the NOx purification rate changes depending on the engine operating state (engine speed Ne and intake pressure PM). Generally, the larger Ne and PM are, the more the characteristic of the NOx purification rate moves to the right side in the figure. The smaller Ne and PM are, the characteristic of the NOx purification rate moves to the left side of the drawing. In order to reduce the rich time while maintaining the NOx purification rate at a predetermined level (for example, 95% or higher in Fig. 5), therefore, the optimum rich time is obtained from A1, A2, and A3 in Fig. 5 in accordance with the states of Ne and PM (where A1 < A2 < A3).

On the other hand, the lean time LT is obtained from the rich time RT and a predetermined coefficient $\alpha$ as follows.

$$LT = RT \cdot \alpha$$

It is sufficient to set the coefficient $\alpha$ to a fixed value of approximately 100. The coefficient $\alpha$ can be also variably set in accordance with the engine operating state such as the engine speed Ne and the intake pressure PM.

After that, the CPU 31 increases the period counter PC by "1" in step 203. Then the CPU 31 discriminates whether the PC value reaches a value corresponding to the set lean time LT or not in step 204. When PC < LT and step 204 is discriminated negatively, the CPU 31 advances to step 205 and sets the target air-fuel ratio $\lambda$TG as a lean control value on the basis of the engine speed Ne and the intake pressure PM at each time. After setting the λTG value, the CPU 31 is returned to the original routine of Fig. 2.

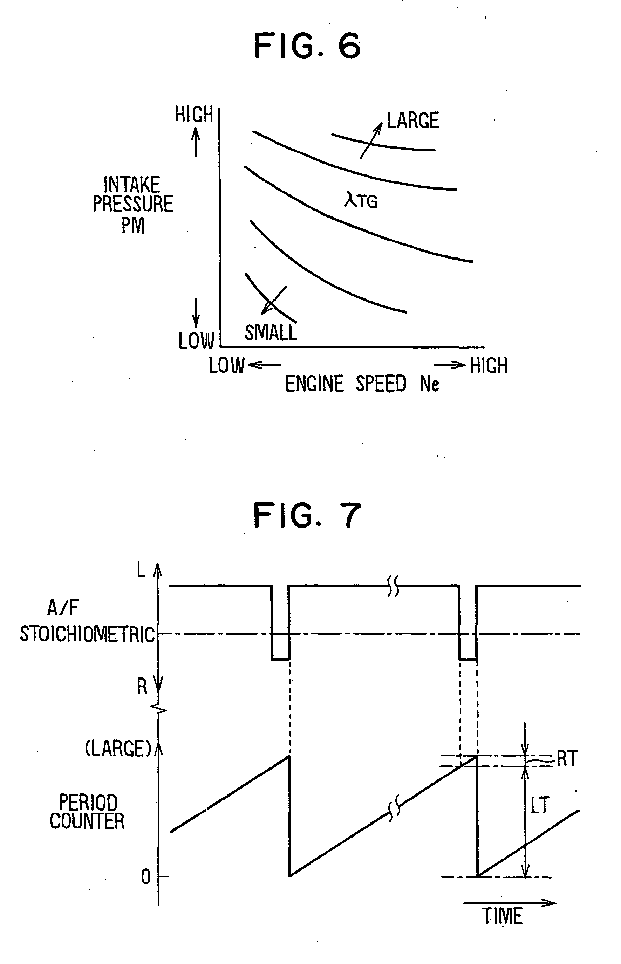

In this case, the λ TG value is obtained by, for example, retrieving the target air-fuel ratio map data shown in Fig. 6 and a value corresponding to, for instance, A/F = 20 to 23 is set as the λ TG value. When the lean mixture combustion executing conditions are not satisfied such as a case when the operation is not steady, the λTG value is set near the stoichiometric ratio. In such a case, the λTG value set in step 205 is used for the calculation of the FAF value in step 105 in Fig. 2 and the air-fuel ratio is controlled to the lean side by the FAF value.

When PC ≧ LT and step 204 is positively discriminated, the CPU 31 advances to step 206 and the target air-fuel ratio λTG is set as a rich control value. In this case, the λ TG value can be set to a fixed value in the rich zone or variably set by retrieving the map data on the basis of the engine speed Ne and the intake pressure PM. In case of performing the map data retrieval, the λTG value is set so that the higher the engine speed Ne is or the higher the intake pressure PM is, the degree of richness becomes higher.

After that, the CPU 31 discriminates whether or not the PC value reaches a value corresponding to the sum "LT + RT" of the lean time LT and the rich time RT which have been set in step 207. When PC < LT + RT and step 207 is negatively discriminated, the CPU 31 returns to the original routine of Fig. 2. In such a case, the λTG value set in step 206 is used for the calculation of the FAF value in step 105 in Fig. 2 and the air-fuel ratio is controlled to be on the rich side by the FAF value.

On the other hand, when PC ≧ LT + RT and step 207 is discriminated positively, the CPU 31 clears the period counter to "0" in step 208 and returns to the original routine of Fig. 2. In association with the clearing operation of the period counter, step 201 is discriminated as YES in the next processing and the lean time LT and the rich time RT are newly set. The lean control and the rich control of the air-fuel ratio are executed again on the basis of the lean time LT and the rich time RT.

As shown in Fig. 7, during the period in which PC = 0 to LT, the air-fuel ratio is controlled to be on the lean side. At this moment, NOx in the exhaust gas is occluded by the NOx catalyst 19. In the period in which PC = LT to LT + RT, the air-fuel ratio is controlled to the rich side. At this moment, the NOx occluded by the catalyst 19 is reduced and unburnt gas components (HC, CO) in the exhaust gas are released. In this manner, the lean control and the rich control of the air-fuel ratio are repeatedly executed in accordance with the lean time LT and the rich time RT.

According to the example as described above in detail, the effects shown below are obtained.

(a) The rich time for the rich mixture combustion is set in accordance with the engine operating state and the NOx purification rate by the NOx catalyst 19. In short, since the rich time is set to be rather long by including a margin in the conventional apparatus, there is feared that deterioration in fuel consumption and torque fluctuation is caused. In the example, however, by setting the rich time in accordance with the relations of Figs. 4 and 5 to shorten the rich time, the inconvenience of the conventional apparatus can be solved. Even if the engine operating state changes, the proper rich mixture combustion can be always performed. As a result, the rich mixture combustion is executed for the optimum time and the improvement in fuel consumption and suppression in the torque fluctuation can be realized.

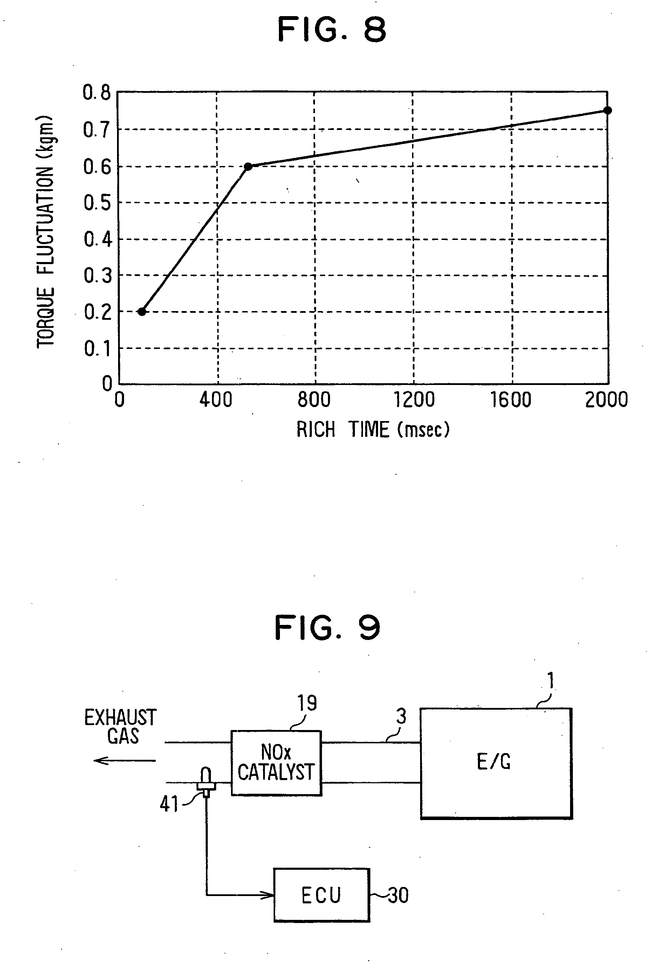

Fig. 8 shows experimental data showing the relation between the rich time per time and the torque fluctuation at each time. It is understood from the diagram that the shorter the rich time is, the more the torque fluctuation is suppressed.

(b) The shortest rich time is set within a range where a desired NOx purification rate by the NOx catalyst 19 is obtained. In this case, the optimum rich time can be set and the NOx purification performance by the NOx catalyst 19 can be maintained.

(Second Example)

This embodiment of the invention is characterized in that the rich time is learned one by one while monitoring the NOx purification state by the NOx catalyst 19 in order to optimally shorten the rich time. As shown in Fig. 9, an NOx sensor 41 serving as catalyst state detector is provided on the downstream side of the NOx catalyst 19 and an output of the sensor 41 is fetched by the ECU 30. The ECU 30 learns to gradually shorten the rich time while monitoring the output of the NOx sensor. When the output of the NOx sensor (NOx concentration) becomes a predetermined value or larger during the process for shortening the rich time, the rich time at that time is regarded as the minimum and is stored into the backup RAM 34 in the ECU 30.

The sensor 41 generates a current signal corresponding to the NOx concentration by using an oxygen ion conductive solid electrolyte substrate made of stabilized zirconia or the like.

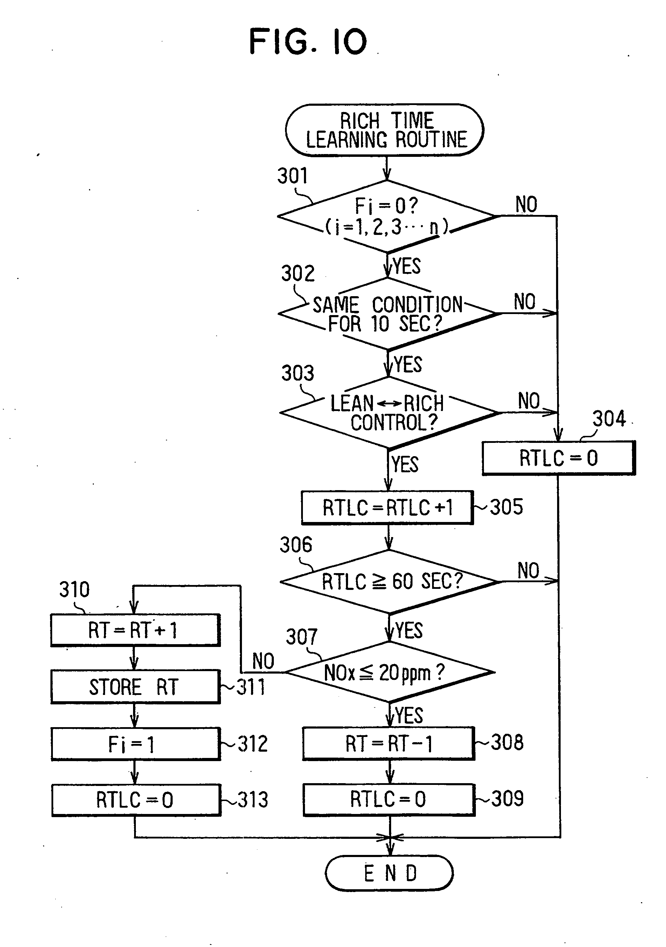

When the routine of Fig. 10 is starts, first in step 301, the CPU 31 discriminates whether a learning completion flag Fi when the engine operating state is in an "(i) zone (where, i = 1, 2, 3, ... n)" is "0" or not. The engine operating zone from 1 to n is set according to the engine speed Ne and the intake pressure PM and the learning completion flag Fi is provided for every operating zone. Fi = 0 denotes that the learning of the rich time in the (i) zone has not been completed and Fi = 1 denotes that the learning of the rich time in the (i) zone has been completed. The flag Fi is initialized to "0" in the beginning of activation of the routine.

In step 302, the CPU 31 discriminates whether or not a predetermined engine operating state is continued for 10 or more seconds. In the following step 303, whether the lean/rich switching is executed or not, that is, whether the stoichiometric operation is executed or not in the cases of low-temperature start of the engine 1, high load operation, and the like.

When NO in neither one of the steps 301 to 303, the CPU 31 advances to step 304. When YES in all of the steps 301 to 303, the CPU 31 advances to step 305. In step 304, the CPU 31 clears the rich time learning counter RTLC for measuring time intervals of the rich time learning time to "0" and finishes the routine once.

In step 305, the CPU 31 increases RTLC by "1". In the following step 306, the CPU 31 discriminates whether the value of the RTLC at that time reaches a value corresponding to a predetermined time (60 seconds in the embodiment) or not. If RTLC < 60 seconds, the CPU 31 finishes the routine as it is. If RTLC $\geqq$ 60 seconds, the CPU 31 advances to the next step 307. The time of "60 seconds" corresponds to a time required for rich time learning (learning period).

The CPU 31 discriminates whether the output value of the NOx sensor 41 is equal to or lower than a predetermined discrimination value for assuring a desired NOx purification rate (value corresponding to NOx concentration = 20 ppm in the embodiment). In this case, it is preferable to average the NOx sensor outputs in one learning period and compare the calculated average value with the predetermined discrimination value (20 ppm).

In the case where NOx $\leqq$ 20 ppm, the CPU 31 regards that the rich time can be shortened more and shortens the rich time (the number of rich injection times) only by one injection in step 308. For example, the initial value of the rich time is set to about 10 injections. The CPU 31 clears RTLC to "0" in the following step 309 and finishes the routine. In this manner, in the state where the discrimination result of step 307 is YES, the rich time is gradually shortened.

On the other hand, when NOx > 20 ppm, the CPU 31 regards that the desired NOx purification rate cannot be assured with the present rich time and increases the rich time (the number of rich injections) only by one injection in step 310. The CPU 31 stores the rich time at that time into the backup RAM 34 in the following step 311. In this instance, the rich time learned is stored for every engine operation state (every zone from 1 to n) at each time. The learned value of the rich time stored in the backup RAM 34 is stored and held even if the power source is disconnected.

After that, the CPU 31 sets "1" to the learning completion flag Fi corresponding to the operation zone i (= 1 to n) at that time in step 312, clears the rich time learning counter to "0" in the following step 313, and finishes the routine.

When the rich time is learned and the value is updated as above, in step 202 in Fig. 3, the rich time according to the operation zone i (= 1 to n) at each time is read out from the backup RAM 34. In this instance, the lean time is calculated as follows.

$$\texttt{lean time} = \alpha \cdot \texttt{RT}$$

where, the coefficient $\alpha$ can be set to a fixed value of about "100" or variably set according to the engine operating state such as the engine speed Ne and the intake pressure PM.

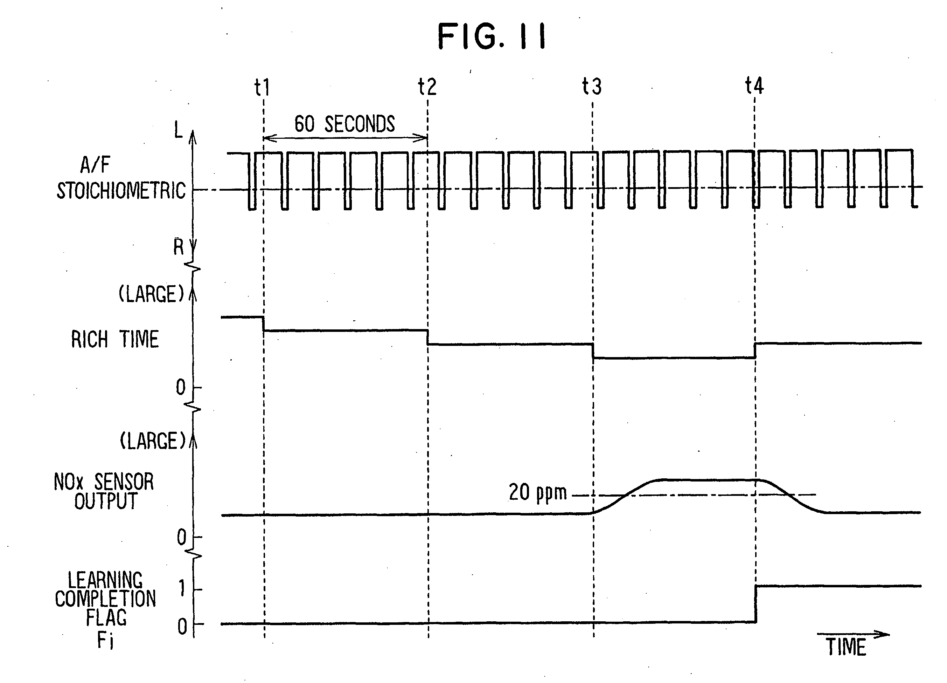

The operation according to Fig. 10 will be described more specifically by using the time chart of Fig. 11.

In Fig. 11, each of the periods defined by times t1 to t4 shows a rich time learning period (60 seconds in the embodiment). At the times t1, t2, and t3, the output of the NOx sensor (average value in the learning period) is below the predetermined value (20 ppm). Consequently, the rich time is shortened only by one injection (step 308 in Fig. 10).

On the contrary, at the time t4, the output (average value in the term from time t3 to time t4) of the NOx sensor exceeds the predetermined value (20 ppm). The rich time of one injection is therefore added and the resultant rich time is stored as a learned value into the memory (steps 310 and 311 in Fig. 10). At the time t4, "1" is set to the learning completion flag Fi (step 312 in Fig. 10).

According to the embodiment described above in detail, the following effects can be obtained.

(a') When the rich time is gradually updated so as to be shortened while monitoring the NOx purifying state by the NOx catalyst 19 and the rich time at that time is discriminated as a limit value from the NOx purified state by the catalyst 19, the updating of the rich time to shorten the rich time is cancelled. By the operation, the rich time can be shortened while assuring the NOx purifying performance of the NOx catalyst 19. In such a case as well, the rich mixture combustion is carried out for the optimum time and the improvement in the fuel consumption and the suppression of torque fluctuation can be realized.

(b') The NOx sensor 41 is provided on the downstream side of the NOx catalyst 19 and the degree of the NOx purification by the NOx catalyst 19 is discriminated based on the output of the sensor. Consequently, the shortening of the rich time is permitted or prohibited on the basis of the output (NOx concentration) of the NOx sensor and the rich time can be properly learned.

(c') The learned value of rich time is stored every operating zone of the engine 1. Consequently, the rich time according to the engine operating state can be set each time so that a change in the operating state can be properly dealt with.

(d') When it is discriminated that the rich time reaches the limit value of the shortening on the basis of the output of the NOx sensor, the rich time is updated to the opposite side (time corresponding to one injection is added). In this case, even if the rich time is shortened excessively, the rich time can be corrected. The optimum rich time can be always set even when the rich time has to be prolonged due to a change with time such as deterioration of the NOx catalyst 19.

**Claims**

1. A control system for an internal combustion engine, comprising:

air-fuel ratio control means (16, 30, 101-106) for normally controlling an air-fuel ratio of air-fuel mixture supplied to the internal combustion engine to a lean side with respect to a stoichiometric ratio for a lean mixture combustion, and temporarily controlling the air-fuel ratio to a rich side with respect to the stoichiometric air-fuel ratio;
NOx catalyst means (19) for occluding NOx in an exhaust gas exhausted at the time of the lean mixture combustion and releasing the occluded NOx from the NOx catalyst by temporarily controlling the air-fuel ratio to the rich side for a rich mixture combustion; and
catalyst state detecting means (30, 41, 307) for detecting an NOx purification state of the NOx catalyst,
**characterized by**
rich time updating means (30, 308) for updating a rich time for the rich mixture combustion so as to be shortened at every predetermined time period; and
update cancelling means (30, 310) for canceling an update of the rich time to a shorter time when the rich time at that time is discriminated as a limit value from the detected NOx purification state of the catalyst.

2. The control system as in claim 1, wherein:

the catalyst state detecting means (30, 41, 307) comprises a gas concentration sensor (41) provided on a downstream side of the NOx catalyst, and discriminating means (30, 307) for discriminating a degree of NOx purification of the NOx catalyst on the basis of an output value of the sensor.

3. The control system as in claim 1 or 2, further comprising:

storing means (34) for storing the updated rich time for every operating zone of the internal combustion engine.

**Patentansprüche**

1. Steuerungssystem für eine Brennkraftmaschine, das Folgendes aufweist:

eine Luft-Kraftstoff-Verhältnis-Steuerungseinrichtung (16, 30, 101 - 106) zum normalen Steuern eines Luft-Kraftstoff-Verhältnisses eines zu der Brennkraftmaschine zugeführten Luft-Kraftstoff-Gemisches zu einer mageren Seite in Bezug auf ein stöchiometrisches Verhältnis für eine Verbrennung mit magerem Gemisch und zum temporären Steuern des Luft-Kraftstoff-Verhältnisses zu einer fetten Seiten in Bezug auf das stöchiometrische Luft-Kraftstoff-Verhältnis;
eine NOx-Katalysatoreinrichtung (19) zum Einschließen von NOx in einem Abgas, das zu der Zeit der Verbrennung mit magerem Gemisch ausgestoßen wird, und zum Abgeben des eingeschlossenen NOx aus dem NOx-Katalysator durch temporäres Steuern des Luft-Kraftstoff-Gemisches zu der fetten Seite für eine Verbrennung mit fettem Gemisch; und
eine Katalysatorzustandserfassungseinrichtung (30, 41, 307) zum Erfassen eines NOx-Reinigungszustands des NOx-Katalysators,
**gekennzeichnet durch**
eine Aktualisierungseinrichtung für eine fette Zeit (30, 308) zum Aktualisieren einer fetten Zeit für die Verbrennung mit fettem Gemisch, um zu jeder vorbestimmten Zeitdauer verkürzt zu werden; und
eine Aktualisierungsabbrucheinrichtung (30, 310) zum Abbrechen einer Aktualisierung der fetten Zeit zu einer kürzeren Zeit, wenn die fette Zeit zu dieser Zeit als ein Grenzwert von dem erfassten NOx-Reinigungszustand des Katalysators diskriminiert wird.

2. Steuerungssystem nach Anspruch 1, wobei:

die Katalysatorzustandserfassungseinrichtung (30, 41, 307) einen Gaskonzentrationssensor (41), der an einer stromabwärtigen Seite des NOx-Katalysators vorgesehen ist, und eine Diskriminierungseinrichtung (30, 307) zum Diskriminieren eines NOx-Reinigunggrads des NOx-Katalysators auf der Grundlage eines Ausgangswerts des Sensors aufweist.

3. Steuerungssystem nach Anspruch 1 oder 2, das des Weiteren Folgendes aufweist:

eine Speichereinrichtung (34) zum Speichern der aktualisierten fetten Zeit für jeden Betriebsbereich der Brennkraftmaschine.

**Revendications**

1. Système de commande pour un moteur à combustion interne, comprenant :

un moyen de commande du rapport air/carburant (16, 30, 101-106) pour commander normalement un rapport air/carburant d'un mélange air-carburant fourni au moteur à combustion interne côté pauvre par rapport à un rapport stoechiométrique pour une combustion à mélange pauvre, et commander temporairement le rapport air/carburant côté riche par rapport au rapport air/carburant stoechiométrique ;
un moyen formant catalyseur de monoxyde d'azote (19) pour occlure le monoxyde d'azote dans un gaz d'échappement s'échappant au moment de la combustion du mélange pauvre et libérer le monoxyde d'azote occlus du catalyseur de monoxyde d'azote en commandant temporairement le rapport air/carburant côté riche pour une combustion à mélange riche ; et
un moyen de détection de l'état du catalyseur (30, 41, 307) pour détecter un état d'épuration du monoxyde d'azote du catalyseur de monoxyde d'azote,
**caractérisé par**
un moyen de mise à jour (30, 108) du temps de combustion à mélange riche pour mettre à jour un temps de combustion à mélange riche pour la combustion à mélange riche afin de le raccourcir à chaque période prédéterminée de temps ; et
un moyen d'annulation de mise à jour (30, 310) pour annuler une mise à jour du temps de combustion à mélange riche sur un temps plus court lorsque le temps est différencié comme une valeur limite à partir de l'état détecté d'épuration du monoxyde d'azote du catalyseur.

2. Système de commande selon la revendication 1, dans lequel :

le moyen de détection de l'état du catalyseur (30, 41, 307) comprend un capteur de concentration de gaz (41) placé sur un côté aval du catalyseur de monoxyde d'azote, et un moyen de différenciation (30, 307) pour différencier un degré d'épuration du monoxyde d'azote du catalyseur de monoxyde d'azote sur la base d'une valeur de sortie du capteur.

3. Système de commande selon la revendication 1 ou 2, comprenant en outre :

un moyen de stockage (34) pour stocker le temps de combustion à mélange riche mis à jour pour chaque zone de fonctionnement du moteur à combustion interne.

FIG. I

NOx CATALYST

30 : ECU

CPU

ROM

RAM

BACK UP RAM

A/D

I/O

IGNITER

EP 0 908 613 B1

# FIG. 2

```
        ╭─────────────────────╮
        │  FUEL INJECTION     │
        │  CONTROL ROUTINE    │
        ╰─────────────────────╯
                  │
        ┌─────────────────────┐
        │   READ ENGINE       │ ~101
        │  OPERATING STATE    │
        └─────────────────────┘
                  │
        ┌─────────────────────┐
        │   CALCULATE  Tp     │ ~102
        └─────────────────────┘
                  │
                  │              103
              ╱───────────╲
       NO   ╱  ARE F/B     ╲
   ┌───────   CONDITIONS    
   │         ╲ SATISFIED?  ╱
   │          ╲───────────╱
   │                │ YES
   │        ┌─────────────────────┐
   │        │   SET  λTG          │ ~200
   │        └─────────────────────┘
   │                │
 104│               │
   │        ┌─────────────────────┐
   ▼        │   SET  FAF          │ ~105
 ┌────────────┐     └─────────────────────┘
 │  FAF = 1.0 │            │
 └────────────┘            │
        │                  │
        └──────────────────┤
                           │
        ┌─────────────────────┐
        │   CALCULATE  TAU    │ ~106
        └─────────────────────┘
                  │
            ╭───────────╮
            │   E N D   │
            ╰───────────╯
```

# FIG. 3

λTG SETTING ROUTINE

201 PC = 0 ? — NO

YES

202 SET LT AND RT BASED ON Ne AND PM

PC = PC + 1 —203

204 PC ≧ LT ?

NO

YES

205 λTG = LEAN CONTROL VALUE

206 λTG = RICH CONTROL VALUE

207 PC ≧ LT + RT ?

NO

YES

CLEAR PC —208

RETURN

# FIG. 4

# FIG. 5

# FIG. 6

# FIG. 7

# FIG. 8

# FIG. 9

# FIG. 10

```
        ┌────────────────────────┐
        │    RICH TIME           │
        │ LEARNING ROUTINE       │
        └────────────────────────┘
                    │
     301            ▼
        ╱─────────────────────╲        NO
       ╱      Fi = 0 ?         ╲──────────────┐
       ╲  ( i = 1, 2, 3 ⋯ n )  ╱              │
        ╲─────────────────────╱               │
                    │ YES                      │
     302            ▼                          │
        ╱─────────────────────╲     NO         │
       ╱   SAME CONDITION      ╲───────────────┤
       ╲     FOR 10 SEC ?      ╱               │
        ╲─────────────────────╱                │
                    │ YES                      │
     303            ▼                          │
        ╱─────────────────────╲   NO           │
       ╱   LEAN ↔ RICH         ╲───────┐       │
       ╲     CONTROL ?         ╱       │       │
        ╲─────────────────────╱        ▼       │
                    │ YES        ┌──────────┐  │  304
                    ▼            │ RTLC = 0 │◀─┤
            ┌──────────────┐     └──────────┘  │
            │ RTLC=RTLC+1  │─305       │       │
            └──────────────┘           │       │
     306            │                  │       │
        ╱─────────────────────╲   NO   │       │
       ╱    RTLC ≧ 60 SEC ?    ╲───────┤       │
       ╲                       ╱       │       │
        ╲─────────────────────╱        │       │
 310                │ YES              │       │
 ┌──────────┐   307  ▼                  │       │
 │ RT=RT+1  │  ╱─────────────────────╲ │       │
 └──────────┘ ╱    NOx ≦ 20 ppm ?     ╲│       │
      │   NO  ╲                       ╱        │
      ├──────── ╲─────────────────────╱         │
      │              │ YES                      │
 ┌──────────┐        ▼                          │
 │ STORE RT │─311  ┌──────────┐                 │
 └──────────┘      │ RT=RT-1  │─308             │
      │            └──────────┘                 │
 ┌──────────┐           │                       │
 │  Fi = 1  │─312       ▼                        │
 └──────────┘      ┌──────────┐                 │
      │            │ RTLC = 0 │─309             │
 ┌──────────┐      └──────────┘                 │
 │ RTLC = 0 │─313       │                       │
 └──────────┘           │                       │
      │                 ▼                        │
      └───────────▶ ┌───────┐◀─────────────────┘
                    │  END  │
                    └───────┘
```

# FIG. 11

EP 0 908 613 B1

**EP 0 908 613 B1**

**REFERENCES CITED IN THE DESCRIPTION**

**Patent documents cited in the description**

- JP 2600492 B
- JP 5506785 A
- EP 0733787A A